# EUROPEAN PATENT SPECIFICATION

(11) **EP 4 101 580 B1**
(45) Date of publication and mention of the grant of the patent: **27.11.2024**
(21) Application number: 21749526.6
(22) Date of filing: 05.02.2021
(51) Int. Cl.: C23C 4/08, C23C 4/06, C23C 4/131, C25D 7/06, C25D 3/38, B23K 35/30, B23K 35/40

(54) **THERMAL SPRAY WIRE**
THERMISCHER SPRITZDRAHT
FIL DE PULVÉRISATION THERMIQUE

(30) Priority: 05.02.2020 JP 2020018315
(43) Date of publication of application: 14.12.2022
(73) Proprietor: NISSAN MOTOR Co., Ltd., Yokohama-shi, Kanagawa 221-0023 (JP)
(72) Inventor: HIRAYAMA, Hayato, Atsugi-shi, Kanagawa 243-0123 (JP); HIGUCHI, Tsuyoshi, Atsugi-shi, Kanagawa 243-0123 (JP); TAINAKA, Naoya, Atsugi-shi, Kanagawa 243-0123 (JP); HOSHIKAWA, Hiroaki, Atsugi-shi, Kanagawa 243-0123 (JP)
(74) Representative: Grünecker Patent- und Rechtsanwälte PartG mbB
(86) International application number: PCT/JP2021/004325
(87) International publication number: WO 2021/157696

(56) References cited:
- JP-A- H04 231 195
- JP-A- H04 231 195
- JP-A- H04 339 589
- JP-A- H05 222 511
- JP-A- H10 137 940
- JP-A- H10 137 940
- JP-A- S55 147 498
- JP-A- S55 147 498
- US-A1- 2004 247 946
- METCO SULZER: "Thermal spray materials guide", 31 December 2006 (2006-12-31), pages 1 - 2, XP093049390, Retrieved from the Internet <URL:N/A> [retrieved on 20230524]
- N/A: "Chemical Composition for Stainless Steel Welding wire Grade Chemical composition Unit :% JIS AISI DIN C Si Mn P S Ni Cr Mo Others Characteristics and Application", 17 July 2013 (2013-07-17), pages 1 - 1, XP093049393, Retrieved from the Internet <URL:http://metalcal.co.il/Fck_Uploads/file/Chemical%20Composition%20for%20Stainless%20Steel%20Welding%20wire.pdf> [retrieved on 20230524]

## Description

### Technical Field

The present invention relates to a thermal spray wire for use in a continuous arc wire thermal spraying machine.

### Background Art

A wear-resistant coating is formed on contact surfaces such as cylinder bores and inner walls thereof in internal combustion engines. Such a coating is formed by thermal spraying such as, for example, arc wire thermal spraying. In arc wire thermal spraying, application of a voltage generates an electric arc between two wire-like thermal spray materials. As a result, wire tips are melted off and conveyed by a thermal spray gas to a surface to be coated, for example, a cylinder wall where they form a deposit.

In order to provide an improved wire-like thermal spray material for such arc wire spraying, PTL 1 has proposed a wire-like thermal spray material that is substantially composed of iron and that is formed at least with carbon as a microalloy such that pearlite, bainite, and martensite are produced by solidification of the thermal spray material. In addition, PTL 1 has also proposed copper plating on a surface of the wire-like thermal spray material to prevent corrosion. JP H10 137940 A discloses a welding wire that is a Cu-plated stainless steel solid wire. A stainless steel wire such as SUS304, Y308, and Y410 is Cu- plated after cold drawing, annealing and again cold drawing, and is further processed by cold drawing to form a prescribed diameter.
JP S55 147498 A discloses a stainless steel wire for gas shielded welding where copper plating is done on a stainless steel (SUS306) wire. The copper plating thickness is limited to 0.1-3µm.
JP H04 231195 A discloses a stainless steel wire for welding that is coated, at first, with a Ni layer, and further, with a Cu layer by galvanizing or the vapor phase deposition coating. After coating, wire drawing is executed, total thickness of Ni and Cu layer is made to 0.1-6µm.
Metco Sulzer: "Thermal spray materials guide", 31 December 2006, pages 1-2, discloses a Metcoloy 2 wire for arc wire thermal spray, that has a Cr content of 13 wt%, a thickness of 1.62mm and is of stainless steel.

### Citation List

### Patent Literature

PTL 1: JP 2014-509260 A

### Summary of Invention

### Technical Problem

An object of the present invention is to provide a thermal spray wire made of stainless steel for performing continuous and stable arc thermal spraying with sufficient electrical conductivity and at a stable voltage, as a thermal spray material for use in continuous arc wire thermal spraying machines.

### Solution to Problem

The present invention has found that continuous and stable arc thermal spraying can be performed with sufficient electrical conductivity and at a stable voltage by using a thermal spray wire as defined in appended claim 1.

### Advantageous Effects of Invention

Using the thermal spray wire of the present invention to perform thermal spraying by a continuous arc wire thermal spraying machine can provide sufficient electrical conductivity and favorable wire feedability. This allows for continuous and stable arc thermal spraying at a stable voltage.

### Description of Embodiments

The composition of the rod made of stainless steel used in the thermal spray wire of the present invention is defined in appended claim 1. The stainless steel includes from 8 to 20% by mass of Cr. Cr content less than 8% tends to decrease corrosion resistance, and Cr content exceeding 20% makes a ferrite structure predominant. Accordingly, the thermal spray wire tends to be soft and broken.

The rod made of stainless steel used in the thermal spray wire of the present invention includes C, Ni, and Mn in addition to Cr. The contents of these elements are C: from 0.005 to 0.2% by mass, Ni: from 0.001 to 3.0% by mass, and Mn: from 0.01 to 3.0% by mass. The elements C, Ni, and Mn are those that promote austenitization. After thermal spraying, austenite is rapidly cooled and becomes martensitic, thereby increasing strength. When the contents of C, Ni, and Mn are less than the lower limits of the above contents, the coating strength after thermal spraying tends to be insufficient. Additionally, Mn content more than the upper limit of the above content makes the wire too hard and reduces elongation, so that breakage is highly likely to occur during wire elongation.

The rod made of stainless steel used in the thermal spray wire of the present invention may further include small amounts of Si, V, Mo, P, S, Al, and others. The maximum contents of these elements are V: 0.15% by mass, Mo: 1.0% by mass, and other elements: 0.01% by mass.

The thermal spray wire of the present invention includes a copper-plated coating having a thickness of from 0.3 to 1.2 µm. When the thickness of the copper-plated coating is less than 0.3 µm, electrical conductivity during arc thermal spraying is insufficient, and it is difficult to perform stable arc thermal spraying at a low voltage level. Thicknesses of the copper-plated coating exceeding 1.2 µm clog the wire feeding mechanism with plating debris, making it difficult to operate the wire feeding mechanism.

The thermal spray wire of the present invention has a diameter of from 1.5 mm to 1.6 mm. When the diameter is less than 1.5 mm, adhesion of the copper plating tends to be poor, which may cause unstable electrical conductivity during arc thermal spraying. When the diameter exceeds 1.6 mm, adhesion of the plating tends to decrease.

### <Conditions for Electrolytic Plating>

The copper-plated coating of the thermal spray wire of the present invention can be produced by immersing a rode made of stainless steel in a copper sulfate solution and performing electrolytic plating under the conditions of a voltage of from 2 to 10 V and a current density of from 1 to 10 A/dm². The conditions allow for relatively stable and high-speed arc thermal spraying.

For a copper sulfate plating bath used for the electrolytic plating, there can be used a solution prepared by mixing and dissolving sulfuric acid and copper sulfate as main components and then adding a brightener and chlorine to the mixture.

In general, the composition of a bath used for electrolytic copper plating includes from 200 to 250 g/L of copper sulfate, from 50 to 60 g/L of metallic copper, from 30 to 75 g/L of sulfuric acid, from 20 to 40 mg/L of chlorine, and appropriate amounts of additives. The bath temperature is maintained at from 20 to 50°C, and processing is performed under the conditions of a voltage of from 2 to 10 V and a current density of from 1 to 10 A/dm² while stirring.

The concentrations of copper sulfate and sulfuric acid can be adjusted appropriately by addition of additives or the like to speed up the plating. A small amount of chlorine ions cause levelling, whereas addition of an excessive amount thereof causes burning of a high current portion. Therefore, it is necessary to adjust appropriately. Furthermore, plating thickness can be controlled by adjusting energization time.

### <Manufacturing of Rod made of Stainless Steel>

The rod made of stainless steel is manufactured to have a diameter of from 1.5 mm to 1.6 mm by cold drawing before electrolytic plating. The rod made of stainless steel can be manufactured, for example, as follows: a molten metal whose composition has been adjusted in a melting furnace is bloomed to produce a rod having a diameter of approximately from 8 to 10 mm, and the rod produced by the blooming is repeatedly cold drawn using dies and processed to have a diameter of from 1.5 mm to 1.6 mm.

### <Formation of Thermal Spray Coating >

Abase material for forming a thermal spray coating using the thermal spray wire of the present invention is not particularly limited, but can be any metal base material that requires abrasion resistance and corrosion resistance. For example, a thermal spray coating can be formed on contact surfaces such as a cylinder bore and an inner wall thereof in an internal combustion engine.

The thermal spray coating can be formed by arc thermal spraying. Arc thermal spraying uses electrical energy as a heat source, and is a method in which a voltage is applied to two metal wires, which are thermal spray materials, to generate an arc discharge, and heat of the arc discharge melts the wire materials, whose melted particles are then atomized and sprayed by injection of a gas such as compressed air onto the base material. Thermally spraying at high speed and increasing arc current enables thermal spraying of from 20 to 40 kg of metal per hour. This is from 2 to 4 times faster than a coating formation speed of a wire flame spraying method. Additionally, the temperature of the melted metal can be raised, so that it is advantageous in that adhesion strength and coating strength of the thermal spray coating are high.

Arc thermal spraying is usually performed by supplying a thermal spray wire to a continuous arc thermal spraying machine by a wire feeding mechanism. It is preferable that the wire feeding mechanism can achieve a constant supply speed or a speed adjustment. Stable wire supply allows for stable thermal spraying. Reduced wire feedability causes wire breakage and degradation of thermal spray coating characteristics. When the thickness of the copper-plated coating formed on the thermal spray wire exceeds 1.2 µm, plating debris clog the wire feeding mechanism, making it difficult to operate the wire feeding mechanism. The hindrance to the wire supply will cause wire breakage and deterioration in thermal spraying quality, which will degrade quality of the thermal spray coating.

### Examples

### (Preparation of Thermal Spray Wire)

A molten metal having a composition adjusted in a melting furnace was bloomed to obtain a rod made of steel having a diameter of 9 mm and including Cr: 14% by mass, C: 0.01% by mass, Ni: 0.2% by mass, and Mn: 0.5% by mass. The obtained rod was repeatedly cold drawn using dies to prepare a rod made of steel having a diameter of 1.58 mm. As a thermal spray wire of Comparative Example 1, the obtained rod is used as it is without copper plating.

As a thermal spray wire used in each of Examples 1 and 2 and Comparative Examples 2 and 3, each steel rod obtained as described above was immersed in a copper sulfate solution having a bath composition including 220 g/L of copper sulfate, 55 g/L of metallic copper, 50 g/L of sulfuric acid, and 30 mg/L of chlorine, and was electrolytically plated at a voltage of from 3 to 7 V and a current density of from 1 to 8 A/dm². In this case, the energization time for the electrolytic plating was adjusted to have each copper plating thickness depicted in Table 1. The copper plating thicknesses are measured in accordance with a "plating thickness test method" described in JIS 8501. The obtained rods made of steel were used as thermal spray wires used in Examples 1 and 2 and Comparative Examples 2 to 3. The thermal spray wires of all of Examples 1 and 2 and Comparative Examples 2 to 3 are the same in composition and wire diameter (1.58 mm), and are different from each other only in the thickness of the copper plating layer, as depicted in Table 1.

**Table 1**

| | Ex. 1 | Ex. 2 | Comp.Ex. 1 | Comp.Ex. 2 | Comp.Ex. 3 |
|---|---|---|---|---|---|
| Copper plating thickness | 0.3 µm | 1.2 µm | 0 | 0.1 µm | 1.5 um |
| Wire diameter | 1.58 mm | 1.58 mm | 1.58 mm | 1.58 mm | 1.58 mm |
| Feedability | Favorable | Favorable | Favorable | Favorable | Debris clog feeding mechanism |
| Voltage | Capable of stable thermal spraying at 20 to 25 V | Capable of stable thermal spraying at 20 to 25 V | When reduced to 25 V, misfire occurs | When reduced to 20 V, misfire occurs | Capable of stable thermal spraying at 20 to 25 V, but negative impact on equipment |

### (Arc Thermal Spraying Test)

The stability of arc thermal spraying was evaluated by performing an arc thermal spraying test on a base material using the thermal spray wires of Examples 1 and 2 and Comparative Examples 1 to 3. The base material used was an aluminum alloy cylinder block in which after casting, the inner surface of a cylinder bore had been primed. The arc thermal spraying test was performed using Heller's twin-wire arc thermal spraying machine VM1 (product name), in which thermal spray voltage was momentarily increased to approximately from 80 to 90 V at one time to generate an initial arc, and then reduced to 20 V to evaluate whether arc thermal spraying could be performed stably.

Table 1 depicts results of the arc thermal spraying test. Examples 1 and 2 were capable of stable thermal spraying at a voltage of from 20 to 25 V. On the other hand, in the case of the thermal spray wire without copper plating of Comparative Example 1, when the voltage is momentarily increased to generate the initial arc and then reduced to 25 V, the dielectric breakdown of air becomes impossible, and the arc disappears (misfire). Additionally, even in Comparative Example 2 with a copper plating having a thickness of 0.1 µm, the dielectric breakdown became impossible and misfire occurred when the voltage was reduced to 20 V. Furthermore, in Comparative Example 3 where the copper plating thickness was increased to 1.5 µm, arc was stable, but plating debris accumulated in wire supply equipment during thermal spraying, which made it difficult to operate the wire feeding mechanism stably.

## Claims

1. A thermal spray wire for use in a continuous arc wire thermal spraying machine including a wire feeding mechanism, the thermal spray wire comprising:
a copper-plated coating having a thickness of from 0.3 to 1.2 µm on a surface of a rod made of stainless steel, wherein a diameter of the wire is 1.5mm or more and 1.6 mm or less,
wherein the stainless steel consists of:
8 to 20% by mass of Cr;
0.005 to 0.2% by mass of C, 0.001 to 3.0% by mass of Ni, 0.01 to 3.0% by mass of Mn;
optionally, Si, V, Mo, P, S and Al, wherein maximum contents of these elements are 0.01% by mass of Si, 0.15% by mass of V, 1.0% by mass of Mo, 0.01% by mass of P, 0.01% by mass of S, and 0.01% by mass of Al; and
a balance of Fe and unavoidable impurities.

2. The thermal spray wire according to claim 1, wherein the stainless steel includes one or more of Si, V, Mo, P, S, and Al.

## Patentansprüche

1. Ein thermischer Sprühdraht zur Verwendung in einer thermischen Sprühdrahtmaschine mit kontinuierlichem Lichtbogen, die einen Drahtvorschubmechanismus enthält, wobei der thermische Sprühdraht umfasst:
eine verkupferte Beschichtung mit einer Dicke von 0,3 bis 1,2 µm auf einer Oberfläche eines Stabes aus rostfreiem Stahl, wobei ein Durchmesser des Drahtes 1,5 mm oder mehr und 1,6 mm oder weniger beträgt, wobei der rostfreie Stahl besteht aus:
8 bis 20 Massenprozent Cr;
0,005 bis 0,2 Massenprozent C;
0,001 bis 3,0 Massenprozent Ni;
0,01 bis 3,0 Massenprozent Mn;
optional Si, V, Mo, P, S und Al, wobei die maximalen Gehalte dieser Elemente 0,01 Masse-% Si, 0,15 Masse-% V, 1,0 Masse-% Mo, 0,01 Masse-% P, 0,01 Masse-% S und 0,01 Masse-% Al betragen; und
einem Rest Fe und unvermeidbaren Verunreinigungen.

2. Der thermische Sprühdraht gemäß Anspruch 1, wobei der rostfreie Stahl eines oder mehrere der Elemente Si, V, Mo, P, S und Al enthält.

## Revendications

1. Fil pour projection thermique destiné à être utilisé dans une machine de projection thermique à arc continu de fil incluant un mécanisme d'alimentation en fil, le fil pour projection thermique comprenant :
un revêtement plaqué cuivre ayant une épaisseur de 0,3 à 1,2 µm sur une surface d'une tige en acier inoxydable, où un diamètre du fil est de 1,5 mm ou plus et de 1,6 mm ou moins,
où l'acier inoxydable est constitué de :
8 à 20 % en masse de Cr ;
0,005 à 0,2 % en masse de C, 0,001 à 3,0 % en masse de Ni, 0,01 à 3,0 % en masse de Mn;
optionnellement, Si, V, Mo, P, S et Al, où les teneurs maximales de ces éléments sont de 0,01 % en masse de Si, 0,15 % en masse de V, 1,0 % en masse de Mo, 0,01 % en masse de P, 0,01 % en masse de S, et 0,01 % en masse d'Al ; et
un reste de Fe et d'impuretés inévitables.

2. Fil pour projection thermique selon la revendication 1, où l'acier inoxydable inclut un ou plusieurs des éléments suivants : Si, V, Mo, P, S et Al.
